Europäisches Patentamt

European Patent Office

Office européen des brevets

(11) Publication number: **0 190 832 B1**

(12) **EUROPEAN PATENT SPECIFICATION**

(45) Date of publication of patent specification: **03.06.92**  (51) Int. Cl.⁵: **G01C 9/06**, G01C 9/20

(21) Application number: **86300270.5**

(22) Date of filing: **16.01.86**

(54) **Inclinometers.**

(30) Priority: **31.01.85 US 696625**

(43) Date of publication of application:
**13.08.86 Bulletin 86/33**

(45) Publication of the grant of the patent:
**03.06.92 Bulletin 92/23**

(84) Designated Contracting States:
**AT CH DE FR GB IT LI NL SE**

(56) References cited:
**DD-A- 226 068**
**GB-A- 1 485 327**
**GB-A- 2 070 774**
**US-A- 4 422 243**

(73) Proprietor: **Lucas Sensing Systems, Inc.**
**21640 North 14th Avenue**
**Phoenix, Arizona 85027(US)**

(72) Inventor: **Anderson, Jane Elizabeth**
**1722 West St. Moritz**
**Phoenix Arizona 85023(US)**
Inventor: **Swartz, Harold Lee**
**7826 N. 60th Avenue**
**Glendale Arizona 85301(US)**
Inventor: **DiMarco, Mario**
**3933 East Waltann Lane**
**Phoenix Arizona 85032(US)**

(74) Representative: **Singleton, Jeffrey et al**
**Eric Potter & Clarkson St. Mary's Court St.**
**Mary's Gate**
**Nottingham NG1 1LE(GB)**

EP 0 190 832 B1

## Description

The invention relates to inclination sensing instruments (inclinometers) and more particularly, to an instrument that provides variable capacitance as a function of inclination angle.

A carpenter's level comprising a transparent tube partially filled with a fluid, such that an air bubble exists within the fluid, has long been employed for determining deviations from the horizontal. These devices in the simplest forms, though inexpensive, do not furnish accurate measures of inclination angle but merely provide an indication of the deviation from the horizontal of a reference surface. For many applications such indications are adequate, while for others accurate measures of the inclination angles are necessary.

Inclination sensing instruments, based on the bubble-in-a-liquid concept, that utilise capacitor variations caused by variable positions of the bubble have been employed to determine deviations from the horizontal. One such device has three, electrically isolated, aluminium foil electrodes covering the liquid containing vial. One electrode is a reference electrode that covers the entire outside of the vial except for the surface over the bubble path. The other two electrodes, each as long and as wide as the bubble, are symmetrically positioned over the bubble path on either side of the vial centre. The liquid in the vial has a high dielectric constant relative to that of the air bubble, thereby establishing a difference in capacitance between the capacitance formed by one sensing electrode and the reference electrode and the capacitance formed by the other sensing electrode and the reference electrode that is a function of the position of the bubble. This device exhibits a linearity and an accuracy that is a function of the location of the sensing electrodes on the vial and the bubble size, which may vary with the fluid temperature.

Other tilt indicating devices of the prior art utilise gravity type potentiometers. One such apparatus comprises resistance wires axially positioned in a V shape or circular tube containing a conducting fluid extending to a given level above the lowest point of the tube. Two equal end segments of resistance wire, extending from the conducting fluid to each end, are formed when the device is coupled to a horizontally positioned reference surface, thus providing wire segments of equal resistance. Tilting this reference surface from a horizontal orientation causes the tube to rotate, establishing wire segments between the conducting fluid and the ends that are of unequal length and resistance. The accuracy of these devices depend on the tolerances maintained on the resistance of the wire, while the stability is a function of the temperature coefficient of resistivity of the wire and temperature coefficient of expansion of the fluid.

GB-A-2070774 discloses an inclinometer comprising a housing of glass or a plastics material and forming a fluid container, a plurality of coplanar metallic sensor plates positioned in the fluid container, a fluid of a predetermined dielectric constant contained in the fluid container to a predetermined level so as partially to immerse the sensor plates, and a gas filling the remainder of the container and having a dielectric constant less than that of the fluid. The sensor plates are exposed to the dielectric fluid which can give rise to a contamination problem.

the present invention, which is defined in the appended claims, provides an inclinometer which includes a chamber within a metallic housing partially filled with fluid which has a high relative dielectric constant. Two coplanar, equally shaped and dimensioned, electrically isolated metallic sheets sandwiched between two sheets of dielectric material are positioned in the chamber and the remainder of the chamber is filled with a gas having a relative dielectric constant that is less than that of the fluid. Each of the coplanar dielectric sheets is a sensor plate of a capacitor that is formed with the metallic housing. These capacitors have equal capacitance when the fluid immersed area of one is equal to the fluid immersed area of the other, signifying that the inclinometer is in a horizontal position. A deviation of the inclinometer from the horizontal position causes the immersed areas of the two sensor plates to differ creating a capacitance differential between the two capacitors. This capacitance differential may be utilised to establish an electrical signal representative of the inclination angle.

Thus, the present invention provides a reliable inclinometer comprised of two capacitors having differential capacitor variations that are linear with tilt angle.

An inclinometer in accordance with the invention will now be described in greater detail, by way of example, with reference to the accompanying drawings, in which:-

Figures 1A and 1B are cut-away views of the embodiment of the invention,

Figure 2 is a cross-sectional view on the line 2-2 of Figure 1A,

Figure 3 is a parts assembly drawing for the embodiment of Figure 1,

Figure 4A is a representation of the capacitor formed by certain components of the embodiment of Figures 1A and 1B, and

Figure 4B is the resultant electrical circuit after combining the capacitor of Figure 4A.

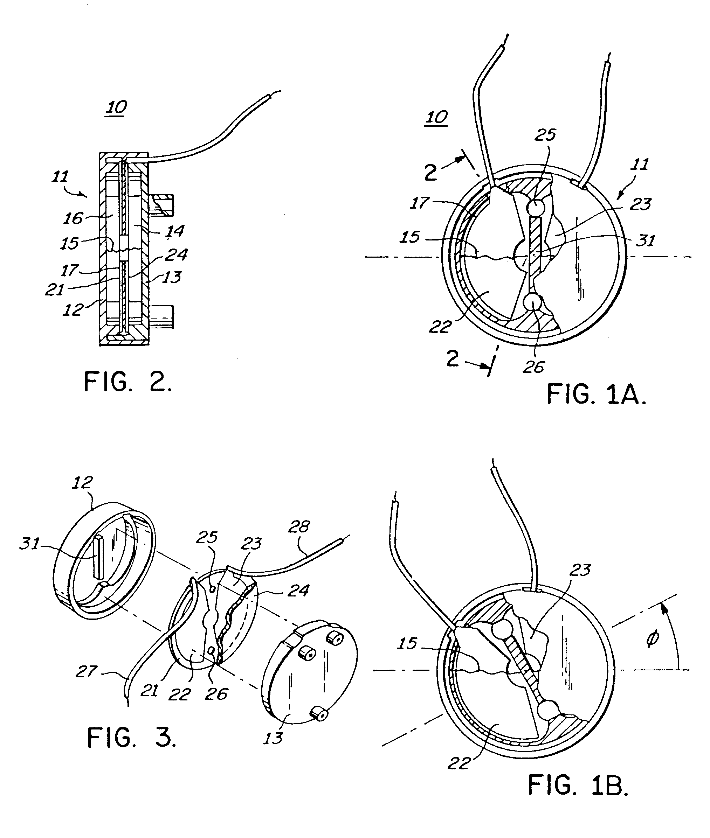

Referring to Figures 1A, 1B, 2 and 3 wherein corresponding elements are assigned the same reference numeral, there is shown an embodiment of the invention generally designated 10 including a housing 11 of two-part construction 12 and 13, forming a fluid container 14 therein. The fluid container 14 contains a liquid, as for example a mixture of hydrocarbon oil possessing a high dielectric strength and an alcohol possessing a high dielectric constant, to a level 15 and a gas atmosphere 16, as for example nitrogen, in the remainder of the fluid container 14. A laminated disc 17 is positioned in the fluid container 14 at an equal distance from the housing halves 12 and 13 to form two fluid chambers. This laminated disc 17 may be constructed by plating a sheet of dielectric material, as for example, 0.003 inches (0.0076mm) thick polyester 21, with copper and chemically etching the copper to form two electrically-decoupled plates 22 and 23 to the desired form. After the etching operation, a second sheet of polyester 24 may be bonded to the first polyester sheet 21 and etched copper electrodes 22 and 23 to sandwich the copper between sheets of polyester. The sandwich so formed covers the two plates 22 and 23 on both sides completely with the dielectric sheets 21 and 24. Holes 25 and 26 are bored through the laminated structure to provide passages for the equalisation of fluid and gas pressures in the chamber 14.

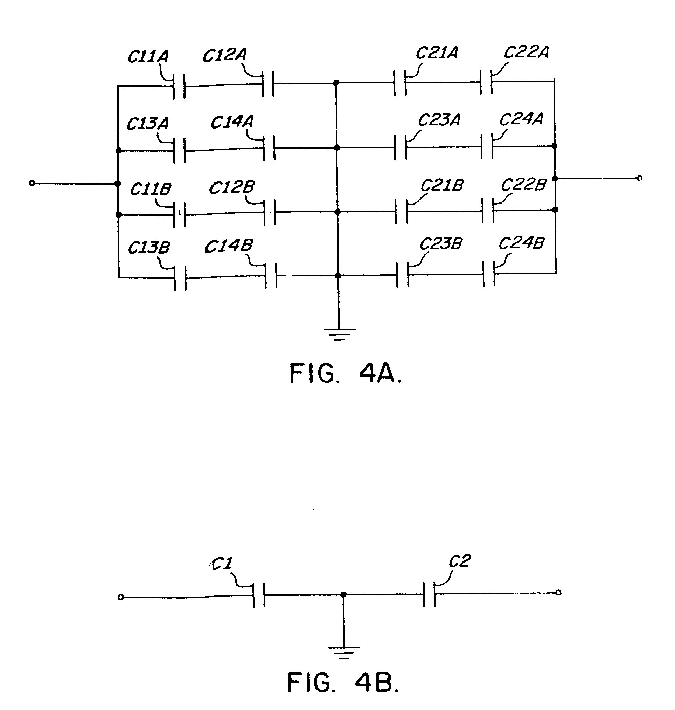

The combination of metallic housing 11, polyester sheets 21 and 24, and copper electrodes 22 and 23 establish a series and parallel combination of capacitors as shown in Figure 4A. Those skilled in the art will recognise that the capacitor C11A is representative of the capacitance between the copper plate 22 and the polyester sheet 21 - fluid boundary, and that the capacitor C12A is representative of the capacitance between this boundary and the metallic housing 11 which may be considered as a ground electrode. These capacitors are in parallel with the series combination of capacitor C13A representative of the capacitance between the copper electrode 22 and the polyester sheet 24 - fluid boundary, and the capacitance C14A between this boundary and the metallic housing 11. Similarly, capacitors C11B and C13B are representative of the capacitances across the polyester sheets 21 and 24 in the gas region, while capacitors C12B and C14B are representative of the capacitances between the polyester sheet - gas boundary and the metallic housing 11. It should be apparent to those skilled in the art that capacitors C21A - C24A and C21B - C24B are similarly formed between the copper electrode 23 and the metallic housing 11.

The combination of series and parallel capacitors, formed between the copper electrode 22 and the metallic housing 11, may be represented as a single capacitance C1 while the combination of capacitors formed between the copper electrode 23 and the metallic housing 11 may be represented as a single capacitance C2 as shown in Figure 4B. Grounding of the capacitors indicated in Figures 4A and 4B is representative of the metallic housing 11 to ground. Access to the two capacitors C1 and C2 is achieved through leads 27, 28 respectively coupled to the copper electrodes 22 and 23, while electricaly isolation between the capacitors C1 and C2 is achieved by positioning a metallic partition 31 extending from the metallic housing 11 towards the laminated disc 17 with a projection thereof between the copper electrodes 22 and 23.

When the sensor is appropriately coupled to a horizontal reference surface equal areas of the copper electrodes 22 and 23 are immersed in the fluid 15 and the capacitors C1 and C2 are equal. When the surface is inclined by an angle, as shown in Figure 1B, the sensor is tilted through an equal angle. Due to gravitational forces the liquid level 15 remains unaltered, however the copper electrodes 22, 23 are rotated such that one electrode, electrode 22 as shown in Figure 1B, has a greater area immersed in the fluid 15 than the other. Since the dielectric constant of the fluid 15 is greater than that of the gas the capacitance C1 associated with the copper electrode 22 at the angle is greater than the capacitance C2 associated with the copper electrode 23. This capacitance differential may be utilised to determine the inclination angle.

## Claims

1. An inclinometer comprising a housing (12,13) forming a fluid container (14), a plurality of coplanar metallic sensor plates (22,23) positioned in the fluid container (14), a fluid (15), having a preselected dielectric constant, contained in the fluid container at a predetermined level so as partially to immerse the metallic sensor plates therein, and a gas filling the remainder of the fluid container and having a dielectric constant less than the preselected dielectric constant of the fluid, characterised in that the housing (12) is metallic and in that the plurality of sensor plates comprises first and second coplanar metallic sensor plates (22,23) positioned between first and second sheets (21,24) of a dielectric material.

2. An inclinometer according to claim 1 characterised in that the container (14) is formed by first and second metallic outer walls and a metallic perimeter; in that

 the first sheet (21) of dielectric material is positioned within the container at a preselected distance from said first metallic outer wall to form a first fluid chamber bounded by said first sheet of dielectric material, said first metallic outer wall, and said metallic perimeter; and in that

the second sheet (24) of dielectric material is positioned within the container in a parallel relationship with said first sheet of dielectric material at a distance from said second metallic outer wall that is equal to said preselected distance to form a second fluid chamber bounded by said second sheet of dielectric material, said second metallic outer wall, and said metallic perimeter.

3. An inclinometer according to claim 1 or 2, characterised in that the first and second metallic sensor plates (22,23) have a separation distance therebetween to provide a metal-free region of a predetermined length in the plane of the first and second sensor plates (22,23).

4. An inclinometer in accordance with any of the preceding claims, characterised in that the first and second dielectric sheets (21,24) contain holes (25,26) to provide passages for the fluid (15) and the gas to equalise gas and fluid pressure within the fluid container (14).

5. An inclinometer in accordance with any of the preceding claims, characterised in that it further includes a metallic partition (31) positioned between the first and second metallic sensor plates (22,23) to provide electrical isolation therebetween.

6. An inclinometer in accordance with claim 5, when appended to claims 2 and 3, characterised in that the metallic partition (31) extends from at least one of the first and second metallic walls of the container (14) towards the plane of the first and second sensor plates (22,23) for a distance not greater than said preselected distance and positioned such that an imaginary geometric projection of the metallic partition in said plane is between the first and second metallic sensor plates, the metallic partition having a length equal to said predetermined length of said metal-free region.

7. An inclinometer according to claim 5 or 6, when appended to claim 4, characterised in that the metallic partition (31) has fluid passages (32,33) therein aligned with the holes (25,26) in the first and second dielectric sheets (21,24).

8. An inclinometer in accordance with any of the preceding claims, characterised in that the metallic sensor plates (22,23) are contained wholly within the perimeter of the dielectric sheets (21,24).

9. An inclinometer in accordance with any of the preceding claims, characterised in that the dielectric material is polyester plastics.

10. An inclinometer in accordance with any of the preceding claims, characterised in that the gas is nitrogen.

11. An inclinometer in accordance with any of the preceding claims, characterised in that the fluid comprises a mixture of a hydrocarbon oil and an alcohol.

12. An inclinometer according to any of the preceding claims, characterised in that the first and second metallic sensor plates (22,23) are provided on the first or second sheet of dielectric material (21,24).

13. An inclinometer according to claim 12, characterised in that the first and second sensor plates (22,23) are provided on the first or second sheet (21,24) of dielectric material by plating that sheet with a single metallic sensor and then etching the plated sensor to split the same into first and second sensor plates.

**Revendications**

1. Inclinomètre comportant un boîtier (12, 13) formant un réservoir à fluide (14), une série de plaques détectrices métalliques coplanaires (22, 23) placées dans le réservoir à fluide (14), un fluide (15) possédant une constante diélectrique présélectionnée, contenu dans le réservoir à fluide à un niveau prédéterminé de manière à immerger partiellement les plaques détectrices métalliques dans celui-ci, et un gaz qui remplit le reste du réservoir à fluide et possède une constante diélectrique inférieure à la constante diélectrique présélectionnée du fluide caractérisé en ce que le boîtier (12) est métallique en ce que la série de plaques détectrices comprend des première et seconde plaques détectrices métalliques coplanaires (22, 23) interposées entre des première et seconde feuilles (21 24) faites d'un matériau diélectrique.

2. Inclinomètre selon la revendication 1, caractérisé en ce que le réservoir (14) est formé par des première et seconde parois extérieures métalliques et par un périmètre métallique; en ce que

la première feuille (21) de matériau diélectrique est placée à l'intérieur du réservoir à une distance présélectionnée de ladite première paroi extérieure métallique pour former une première chambre à fluide délimitée par ladite première feuille de matériau diélectrique, ladite première paroi extérieure métallique, et ledit périmètre métallique; et en ce que

la seconde feuille (24) de matériau diélectrique est placée à l'intérieur du réservoir dans une relation parallèle avec ladite première feuille de matériau diélectrique à une distance de ladite seconde paroi extérieure métallique, égale à ladite distance présélectionnée, pour former une seconde chambre à fluide délimitée par ladite seconde feuille de matériau diélectrique, ladite seconde paroi extérieure métallique, et ledit périmètre métallique.

3. Inclinomètre selon la revendication 1 ou 2, caractérisé en ce que les première et seconde plaques détectrices métalliques (22, 23) présentent entre elles une distance de séparation destinée à définir une zone sans métal ayant une longueur prédéterminée dans le plan des première et seconde plaques détectrices (22, 23).

4. Inclinomètre selon l'une quelconque des revendications précédentes, caractérisé en ce que les première et seconde feuilles diélectriques (21, 24) comportent des trous (25, 26) destinés à définir des passages pour le fluide (15) et le gaz, afin d'équilibrer une pression de gaz et de fluide à l'intérieur du réservoir à fluide (14).

5. Inclinomètre selon l'une quelconque des revendications précédentes, caractérisé en ce qu'il comporte également une cloison métallique (31) interposée entre les première et seconde plaques détectrices métalliques (22, 23) pour définir une isolation électrique entre celles-ci.

6. Inclinomètre selon la revendication 5, lorsque celle-ci est dépendante des revendications 2 et 3, caractérisé en ce que la cloison métallique (31) s'étend depuis l'une au moins des première et seconde parois métalliques du réservoir (14) en direction du plan des première et seconde plaques détectrices (22, 23) sur une distance ne dépassant pas ladite distance présélectionnée, en étant positionnée de façon qu'une projection géométrique imaginaire de la cloison métallique dans ledit plan se situe entre les première et seconde plaques détectrices métalliques, la cloison métallique ayant une longeur égale à ladite longueur prédéterminée de ladite zone sans métal.

7. Inclinomètre selon la revendication 5 ou 6, lorsque celle-ci est dépendante de la revendication 4, caractérisé en ce que la cloison métallique (31) comporte en elle des passages de fluide (32, 33) alignés avec les trous (25, 26) définis dans les première et seconde feuilles diélectriques (21, 24).

8. Inclinomètre selon l'une quelconque des revendications précédentes, caractérisé en ce que les plaques détectrices métalliques (22, 23) sont entièrement contenues à l'intérieur du périmètre des feuilles diélectriques (21, 24).

9. Inclinomètre selon l une quelconque des revendications précédentes, caractérise en ce que le matériau diélectrique est une matière plastique polyester.

10. Inclinomètre selon l'une quelconque des revendications précédentes, caractérisé en ce que le gaz est de l'azote.

11. Inclinomètre selon l'une quelconque des revendications précédentes, caractérisé en ce que le fluide contient un mélange d'une huile d'hydrocarbure et d'un alcool.

12. Inclinomètre selon l'une quelconque des revendications précédentes, caractérisé en ce que les première et seconde plaques détectrices métalliques (22, 23) sont disposées sur la première ou la seconde feuille de matériau diélectrique (21, 24).

13. Inclinomètre selon la revendication 12, caractérisé en ce que les première et seconde plaques détectrices (22, 23) sont disposées sur la première ou la seconde feuille (21, 24) de matériau diélectrique par un plaquage de cette feuille à l'aide d'un détecteur métallique unique et puis par une attaque du détecteur plaqué en vue de diviser celui-ci en première et seconde plaques détectrices.

**Patentansprüche**

1. Neigungsmesser mit einem Gehäuse (12,13), das einen Fluidbehälter (14) bildet, einer Mehrzahl komplanarer Metall-Sensorplatten (22,23), die in dem Fluidbehälter (14) positioniert sind, einem Fluid (15), das eine vorgewählte Dielektrizitätskonstante aufweist und in dem Fluidbehälter bei einem vorbestimmten Pegel enthalten ist, um so die Metall-Sensorplatten teilweise darin unterzutauchen, und einem Gas, das den Rest des Fluidbehälters füllt und eine kleinere Dielektrizitätskonstante als die vorgewählte Dielektrizitätskonstante des Fluides aufweist, dadurch gekennzeichnet, daß das Gehäuse (12) metallisch ist, und daß die Mehrzahl der Sensorplatten erste und zweite komplanare Metall-Sensorplatten (22,23) umfaßt, die zwischen ersten und zweiten Folien (21,24) aus einem dielektrischen Material positioniert sind.

2. Neigungsmesser nach Anspruch 1, dadurch gekennzeichnet,

daß der Behälter (14) durch eine erste und eine zweite metallische Außenwand und einen metallischen Umkreis gebildet wird,

daß die erste Folie (21) aus dielektrischem Material in dem Behälter in einem vorbestimmten Abstand von der ersten metallischen Außenwand positioniert ist, um eine erste Fluidkammer zu bilden, die begrenzt ist durch die erste Folie aus dielektrischem Material, die erste metallische Außenwand und den metallischen Umkreis,

und daß die zweite Folie (24) aus dielektrischem Material in dem Behälter in paralleler Lage zu der ersten Folie aus dielektrischem Material in einem Abstand von der zweiten metallischen Außenwand positioniert ist, der dem vorgewählten Abstand gleich ist, um eine zweite Fluidkammer zu bilden, die begrenzt ist durch die zweite Folie aus dielektrischem Material, die zweite metallische Außenwand und den metallischen Umkreis.

3. Neigungsmesser nach Anspruch 1 oder 2, dadurch gekennzeichnet, daß die erste und die zweite Metall-Sensorplatte (22,23) einen Trennungsabstand zwischen sich aufweisen, um einen metallfreien Bereich einer vorbestimmten Länge in der Ebene der ersten und der zweiten Sensorplatte (22,23) zu bilden.

4. Neigungsmesser nach einem der vorhergehenden Ansprüche, dadurch gekennzeichnet, daß die erste und die zweite dielektrische Folie (21,24) Löcher (25,26) enthalten, um Passagen für das Fluid (15) und das Gas vorzusehen, um den Gas- und Fluiddruck in dem Behälter (14) auszugleichen.

5. Neigungsmesser nach einem der vorhergehenden Ansprüche, dadurch gekennzeichnet, daß er eine metallische Unterteilung (31) umfaßt, die zwischen der ersten und der zweiten Metall-Sensorplatte (22,23) positioniert ist, um eine elektrische Isolierung zwischen diesen vorzusehen.

6. Neigungsmesser nach Anspruch 5 in Verbindung mit den Ansprüchen 2 und 3, dadurch gekennzeichnet, daß die metallische Unterteilung (31) sich wenigstens entweder von der ersten oder der zweiten metallischen Wand des Behälters (14) zu der Ebene der ersten und zweiten Sensorplatten (22,23) hin erstreckt über eine Strecke, die nicht größer ist als der vorgewählte Abstand, und so positioniert ist, daß eine gedachte geometrische Projektion der metallischen Unterteilung in der Ebene zwischen den ersten und zweiten Sensorplatten liegt, wobei die metallische Unterteilung eine Länge gleich der vorbestimmten Länge des metallfreien Bereichs aufweist.

7. Neigungsmesser nach Anspruch 5 oder 6 in Verbindung mit Anspruch 4, dadurch gekennzeichnet, daß die metallische Unterteilung (31) Fluidpassagen (32,33) aufweist, die mit den Löchern (25,26) in der ersten und zweiten dielektrischen Folie (21,24) fluchten.

8. Neigungsmesser nach einem der vorhergehenden Ansprüche, dadurch gekennzeichnet, daß die Metall-Sensorplatten (22,23) gänzlich in dem Umkreis der dielektrischen Folien (21,24) enthalten sind.

9. Neigungsmesser nach einem der vorhergehenden Ansprüche, dadurch gekennzeichnet, daß das dielektrische Material aus Polyester-Kunststoff besteht.

10. Neigungsmesser nach einem der vorhergehenden Ansprüche, dadurch gekennzeichnet, daß das Gas Stickstoff ist.

11. Neigungsmesser nach einem der vorhergehenden Ansprüche, dadurch gekennzeichnet, daß das Fluid eine Mischung eines Kohlenwasserstofföles und eines Alkohols umfaßt.

12. Neigungsmesser nach einem der vorhergehenden Ansprüche, dadurch gekennzeichnet, daß die erste und die zweite Metall-Sensorplatte (22,23) an der ersten oder zweiten Folie aus dielektrischem Material (21,24) vorgesehen sind.

13. Neigungsmesser nach Anspruch 12, dadurch gekennzeichnet, daß die erste und die zweite Metall-Sensorplatte (22,23) an der ersten oder zweiten Folie aus dielektrischem Material (21,24) dadurch vorgesehen sind, daß die Folie mit einem einzelnen metallischen Sensor beschichtet wird und dann der beschichtete Sensor geätzt wird, um ihn in die erste und die

zweite Sensorplatte aufzuspalten.

FIG. 2.

FIG. 1A.

FIG. 3.

FIG. 1B.

FIG. 4A.

FIG. 4B.